# NEUE EUROPÄISCHE PATENTSCHRIFT

(11) **EP 1 531 442 B2**
(45) Veröffentlichungstag und Bekanntmachung des Hinweises auf die Entscheidung über den Einspruch: **06.11.2013**
(45) Hinweis auf die Patenterteilung: 06.06.2007
(21) Anmeldenummer: 04025019.3
(22) Anmeldetag: 21.10.2004
(51) Int. Cl.: G08G 1/0968

(54) **Verfahren zur Unterstützung der Navigation eines Fahrzeuges und Navigationszentrale**
Method for navigation support of a vehicle and navigation centre
Procédé d'assistance de navigation d'un véhicule et centrale de navigation

(30) Priorität: 12.11.2003 DE 10353108
(43) Veröffentlichungstag der Anmeldung: 18.05.2005
(73) Patentinhaber: Audioton Kabelwerk GmbH Zweigniederlassung Scheinfeld, 91443 Scheinfeld (DE)
(72) Erfinder: Brandt-Anheuser, Klaus, 90518 Altdorf (DE)
(74) Vertreter: Lelgemann, Karl-Heinz

(56) Entgegenhaltungen:
- DE-A1- 10 146 117
- DE-A1- 19 737 256
- US-A1- 2001 029 425
- US-A1- 2003 158 657
- US-B1- 6 622 083

## Beschreibung

Die Erfindung betrifft ein Verfahren zur Unterstützung der Navigation eines Fahrzeuges, bei dem eine einem Nutzer zugeordnete, im Fahrzeug angeordnete Navigationseinrichtung Navigationsanweisungen zur Steuerung des Fahrzeuges ausgibt, sowie eine Navigationszentrale zur Durchführung des Verfahrens.

Bekannte Navigationssysteme für Fahrzeuge bestehen in der Regel aus einer Einrichtung zur Standortbestimmung des Fahrzeugs (GPS-Empfänger), einer Einrichtung zur Eingabe des gewünschten Fahrziels und optischen oder akustischen Ausgabemitteln. Diese Ausgabemittel geben an den Fahrer des Fahrzeugs Navigationsanweisungen aus, die von einem Navigationsrechner aufgrund der Eingabe von Standort und Ziel berechnet werden. Der Navigationsrechner bedient sich hierbei einer im Fahrzeug beispielsweise auf einer CD-ROM gespeicherten Wegenetzkarte, um diese Berechnungen durchzuführen. So ist beispielsweise aus EP 0 261 404 A1 eine derartige Navigationseinrichtung bekannt, die Navigationsanweisungen mittels im Fahrzeug gespeicherter Wegenetzkarten generiert.

Aus DE 41 395 81 A1 ist ein Navigationsverfahren bekannt, bei dem sämtliche Informationen, die für den Fahrzeugbenutzer und seine jeweilige Fahrstrecke von Bedeutung sind, mittels eines Autotelefons von einer zentralen Leitstelle abgefragt werden.

In DE 44 291 21 C1 ist eine Navigationseinrichtung für ein Fahrzeug beschrieben, die einen Navigationsrechner und eine dem Navigationsrechner zugeordnete Speichereinrichtung zur Speicherung von Wegenetzkarten, eine Einrichtung zur Standortbestimmung des Fahrzeuges sowie eine Einrichtung zur Eingabe des gewünschten Fahrzieles und eine Einrichtung zur Ausgabe von Navigationshinweisen aufweist. Die Navigationseinrichtung ist weiter mit einer Empfangseinrichtung versehen, mittels der über ein Mobilfunknetz Wegenetzdaten von einer zentralen Speichereinrichtung in die dem Navigationsrechner zugeordnete Speichereinrichtung heruntergeladen werden. Mittels der von dem Zentralspeicher heruntergeladenen Wegenetzdaten führt der Navigationsrechner sodann die Routenberechnung durch und generiert die Navigationshinweise für den Fahrzeugführer.

Eine ähnliche Navigationseinrichtung mit zwei verschiedenen Kommunikationsnetzen ist enden aus der DE10146117A1 bekannt.

Aus der EP 1 128 163 A2 ist ein Verfahren zur Unterstützung der Navigation eines Fahrzeugs bekannt, bei dem ein im Fahrzeug angeordnetes Endgerät Navigationsanweisungen zur Steuerung des Fahrzeugs ausgibt. Mittels des Endgeräts wird die aktuelle Position des Fahrzeugs und ein Zielpunkt an eine Verkehrstelematik-Zentrale übermittelt, wo daraufhin eine Route errechnet wird. Diese Route wird von der Verkehrstelematik-Zentrale an das fahrzeugseitige Endgerät gesendet. Dieses Endgerät vergleicht die Route mit der Position des Fahrzeugs und generiert Navigationsanweisungen für das Fahrzeug, um den vorgegebenen Zielpunkt zu erreichen. Bei dem bekannten Verfahren ist es darüber hinaus möglich, dass von einem Mobiltelefon oder einem PC aus Routendaten an die Verkehrstelematik-Zentrale übermittelt werden. In der Verkehrstelematik-Zentrale sind je nach Umfang der vom Nutzer in Anspruch genommenen Dienste Daten abgespeichert, bei denen es sich beispielsweise um für diesen Nutzer als interessant eingeordnete "Points of Interest" handeln kann. Darüber hinaus wird mittels der Verkehrstelematik-Zentrale eine dynamische Zielführung zur Verfügung gestellt, die Routenänderungen unter Berücksichtigung der aktuellen Verkehrslage zulässt. Insoweit kann bei dem bekannten Verfahren der Fall eintreten, dass dem im Fahrzeug befindlichen Nutzer eine aktuelle Verkehrslage übermittelt wird, wonach dann der im Fahrzeug befindliche Nutzer entscheiden kann, ob er eine entsprechende, diese aktuelle Verkehrslage berücksichtigende Änderung der Fahrtroute wünscht.

Der Erfindung liegt nun die Aufgabe zugrunde, die Unterstützung des Fahrzeugführers bei der Navigation des Fahrzeugs zu verbessern.

Diese Aufgabe wird durch die Merkmale der unabhängigen Ansprüche gelöst.

Durch die Erfindung werden zahlreiche Vorteile erzielt: Eine Personalisierung von in Fahrzeugen angeordneten Navigationseinrichtungen wird ermöglicht. Dies ist vor allem von Vorteil, wenn Fahrzeuge des öfteren von unterschiedlichen Nutzern verwendet werden, wie dies beispielsweise bei Mietwagen der Fall ist. Weiter wird die einfache Erstellung von Routen für Navigationseinrichtungen gewährleistet und erreicht, daß Routen bereits vor Antritt bzw. während der Fahrt von dritten Personen und mittels Endgeräten, die über ein ausgefeiltes Benutzer-Interface verfügen, spezifiziert werden können. Neben Zeit, Kostenersparnis und Erhöhung des Benutzerkomforts ergibt sich der weitere technische Vorteil, daß die in einem Fahrzeug installierte Navigationseinrichtung in Bezug auf technische Leistungsfähigkeit und Ein- und Ausgabemittel besonders einfach und kostengünstig implementiert werden kann, und gleichzeitig ein hohes Maß an Benutzerkomfort erzielt werden kann.

Vorteilhafte Ausgestaltungen der Erfindung sind in den Unteransprüchen bezeichnet.

Gemäß eines bevorzugten Ausführungsbeispiels der Erfindung fragt die Navigationseinrichtung in regelmäßigen Abständen über das zweite Kommunikationsnetz bei der Navigationszentrale an, ob für den Nutzer, dem die Navigationseinrichtung zugeordnet ist, neue oder gelöschte Zielpunkte vorliegen. Hierdurch wird erreicht, daß eventuelle Änderungen der Routenplanung umgehend bei der Routenführung berücksichtigt werden. Weiter ist es möglich, daß die Navigationszentrale überprüft, ob für einen Nutzer in der Navigationszentrale eine aktive Navigationseinrichtung registriert ist und, falls dies der Fall ist, sie neue oder gelöschte Zielpunkte übermittelt. Auch hier ergibt sich der Vorteil einer unmittelbaren Reaktion auf Routenänderungen sowie der weitere Vorteil einer reduzierten Netzlast. Diese Vorteile sind auch dadurch erzielbar, daß von der Navigationseinrichtung bei jedem Aufbau einer Verbindung mit der Navigationszentrale angefragt wird, ob ein neuer oder gelöschter Zielpunkt für den Nutzer vorliegt, dem die Navigationseinrichtung zugeordnet ist. Hierdurch wird die Anzahl der Verbindungen verringert, die für den Betrieb des Navigationssystems vonnöten sind.
Besonderes vorteilhaft ist es, die Berechnung der Routendaten für zwei oder mehr aufeinanderfolgende Korridorsegmente der Route durchzuführen. Die Navigationseinrichtung fordert die Übermittlung der Routendaten des nachfolgenden Korridorsegments von der Navigationszentrale an, kurz bevor das Fahrzeug das aktuelle Korridorsegment verläßt. Hierdurch wird eine gleichmäßigere Netzauslastung erzielt und vermieden, daß die Navigationseinrichtung durch das Herunterladen von größeren Datenmengen blockiert wird. Weiter ist es möglich, daß die Navigationszentrale bei der Routenberechnung für das jeweilige Korridorsegment aktuelle Verkehrs- und Wetter-Informationen berücksichtigt und damit die Routenführung insgesamt verbessert wird.

Weitere Vorteile lassen sich hierbei dadurch erzielen, daß die Navigationseinrichtung vor Anforderung der Routendaten des letzten Korridorsegments anfragt, ob für die Route ein neuer, gelöschter oder geänderter Ziel punkt vorliegt und, wenn dies der Fall ist, eine neue Routenberechnung durch die Navigationszentrale mit dem neuen, gelöschten bzw. geänderten Zielpunkt veranlaßt. Hierdurch wird zum einen erreicht, die Routenberechnung stets an Änderungen der Route anzupassen, und zum anderen vermieden, sich im nachhinein als überflüssig herausstellende Berechnungen durchzuführen und überflüssige Daten von der Navigationszentrale zu der Navigationseinrichtung herunter zu laden. Es wird so Rechenleistung und über das zweite Kommunikationsnetz zu übermittelnde Datenmenge eingespart.

Vorzugsweise stellt die Navigationszentrale eine WEB-basierte Benutzerschnittstelle bereit, über die von den Endgeräten die eine Route des Nutzers spezifizierenden Daten übermittelt werden. Hierdurch ist es möglich, die Route über eine Vielzahl von bereits vorhandenen Endgeräten einzugeben und ein komfortables Benutzer-Interface für die Routen-Eingabe zur Verfügung zu stellen. Weiter kann die Navigationszentrale über die WEB-basierte Benutzerschnittstelle zusätzlich die Funktion eines Reise-Planungsassistenten anbieten, der Funktionen der Routenplanung, Hotelplanung und Eventsuche bereitstellt. Zielpunkte aus dem Reise-Planungsassistenten werden im folgenden automatisch an die Navigationseinrichtung des zugeordneten Nutzers übermittelt.

Gemäß eines weiteren bevorzugten Ausführungsbeispiels der Erfindung übermittelt ein Terminplanungs-Werkzeug eines Endgerätes über das Kommunikationsnetz eine Route des Nutzers spezifizierende Daten, die zumindest einen Zielpunkt beinhalten, an die Navigationszentrale. Vorteilhafterweise wird als Terminplanungs-Werkzeug hierbei ein bereits auf dem Endgerät vorhandenes Terminplanungs-Werkzeug verwendet, das mittels eines Plug-Ins mit den notwendigen Funktionen zur Interaktion mit der Navigationszentrale ergänzt wird. Hierdurch wird Nutzern ein integriertes Reise-Planungs- und Navigationssystem zur Verfügung gestellt, das sich leicht bedienen läßt und zu einer Effizienzsteigerung führt.

Weiter ist es möglich, daß eine nach zeitlicher Reihenfolge sortierte Liste, die Termin-Daten und zugeordnete Zielpunkte enthält, von der Navigationszentrale an die Navigationseinrichtung des zugeordneten Nutzers übermittelt wird. Eine derartige Liste vereinfacht die Bedienung der Navigationseinrichtung durch den Fahrzeugführer.

Die Personalisierung einer Navigationseinrichtung für einen Nutzer wird durch Eingabe einer Nutzerkennung in die Navigationseinrichtung und Übermittlung der Nutzerkennung an die Navigationszentrale bewirkt. Hierdurch wird initiiert, daß die Navigationseinrichtung in der Navigationszentrale als dem Nutzer zugeordnet registriert wird. Nach der Personalisierung kann auf Anforderung von der Navigationszentrale eine Liste aller vorgemerkten und noch nicht für die Navigation verwendeten Zielpunkte des der Navigationseinrichtung zugeordneten Nutzers übermittelt werden. Die Berechnung der Route durch die Navigationszentrale wird im folgenden bevorzugt durch Benutzerpräferenzen beeinflußt, die in einem Nutzerprofil des Nutzers gespeichert sind. Durch diese Leistungsmerkmale wird die Benutzerfreundlichkeit und die Effizienz des Systems erhöht.

Derartige Vorteile ergeben sich weiter dadurch, daß die Navigationszentrale entlang der berechneten Route mittels Korridorsuche POls ermittelt (POI= Point of Interest) oder die zu berechnende Route betreffenden Verkehrsinformationen ermittelt und derartige Daten an die Navigationseinrichtung übermittelt.

Kostenvorteile lassen sich weiter dadurch erzielen, daß die Navigationseinrichtung mit einer Haltevorrichtung zur Aufnahme des Mobilfunkendgerätes versehen ist und demnach Funktionsgruppen eines in einer derartigen Halterung eingelegten Mobilfunkendgerätes für die Erbringung der oben beschriebenen Funktionen nutzen kann.

Im folgenden wird die Erfindung anhand von mehreren Ausführungsbeispielen unter Zuhilfenahme der beiliegenden Zeichnungen beispielhaft erläutert.
- Fig. 1: zeigt eine Darstellung eines Navigationssystems mit einer erfindungsgemäßen Navigationszentrale und mehreren erfindungsgemäßen Navigationseinrichtungen.
- Fig. 2: zeigt eine Darstellung einer erfindungsgemäßen Navigationseinrichtung für ein erstes Ausführungsbeispiel der Erfindung.
- Fig. 3: zeigt eine Darstellung einer erfindungsgemäßen Navigationseinrichtung für ein zweites Ausführungsbeispiel der Erfindung.
- Fig. 4: zeigt eine Darstellung einer Navigationseinrichtung für ein drittes Ausführungsbeispiel der Erfindung.
- Fig. 5: zeigt eine funktionelle Darstellung der Navigationszentrale und einer Navigationseinrichtung nach Fig. 1.

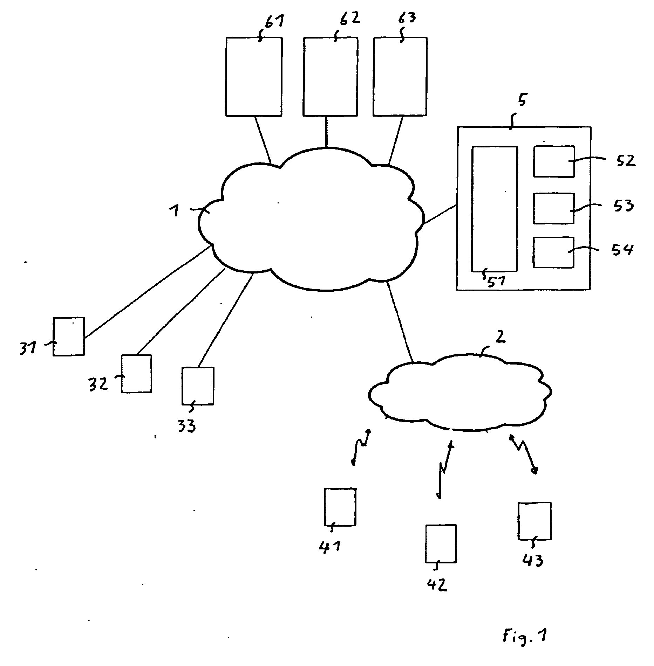

Fig. 1 zeigt ein Navigationssystem für Fahrzeuge mit zwei Kommunikationsnetzen 1 und 2, einer Navigationszentrale 5, mehreren Partnersystemen 61, 62, 63, mehreren Endgeräten 31 bis 33 und mehreren Navigationseinrichtungen 41 bis 43. Bei dem Kommunikationsnetz 1 handelt es sich um ein IP-Netz (IP= Internet Protocol). Ein derartiges Kommunikationsnetz kann aus einer Vielzahl von unterschiedlichen physikalischen Netzwerken bestehen, die als Ebene-3-Protokoll ein IP-Protokoll verwenden.

Das Kommunikationsnetz 2 ist ein Mobilfunknetz, beispielsweise nach dem GSM oder UMTS-Standard (GSM = Global System for Mobile Communication; UMTS = Universal Mobile Telecommunications). Es ist hier aber auch möglich, daß es sich bei dem Kommunikationsnetz 2 um ein andersartiges Funknetz handelt.

Bei den Endgeräten 31 bis 33 handelt es sich um Endgeräte, die Nutzern ein WEB-basiertes Nutzer-Interface zur Kommunikation mit der Navigationszentrale 5 über das Kommunikationsnetz 1 bereitstellen. Derartige Endgeräte werden beispielsweise von einem PC mit Netzwerkkarte oder Modem gebildet, der über einen Web-Browser verfügt.

Die Navigationszentrale 5 besteht aus einem oder mehreren miteinander verbundenen Servern. Auf die Hardware- und Software-Plattform dieses Servers oder dieser Server setzen jeweils Applikationsprogramme auf, die die im folgenden beschriebenen Funktionen der Navigationszentrale 5 steuern. Aus funktioneller Sicht lassen sich diese Applikationsprogramme hierbei verschiedenen Funktionsgruppen zuordnen. So sind beispielsweise in Fig. 1 drei Funktionsgruppen 51, 52, 53 und 54 gezeigt. Bei der Funktionsgruppe 51 handelt es sich um ein Portal-System, das die Anfrage von Nutzern über die Endgeräte 31 bis 33 und Anfragen von der Navigationseinrichtung 41 bis 43 verarbeitet. Dieses Portal-System umfaßt hierbei auch die Funktionen zur Bereitstellung der Kommunikations- und Interaktionsschnittstelle mit den Endgeräten 31 bis 33 und den Navigationseinrichtungen 41 bis 43. Bei den Funktionsgruppen 52 bis 54 handelt es sich beispielsweise um Teilsysteme eines Web-Navigationssystems, das Anfragen des Portal-Systems zur Routenplanung und Navigation verarbeitet. Derartige Untergruppen können beispielsweise die Funktion eines Navigationsservers, der die Berechnung einer Route ohne Zwischenstation und die Berechnung von Routenkorridoren bereitstellt, eines Routenspeichers, eine Benutzerverwaltung und Benutzerregistrierung, eines Lokalisierungsservers, der Adreßangaben in die Koordinaten umrechnet, eines Administrations-Server und einer Gebähren Verwaltung erbringen.

Die Navigationseinrichtungen 41 bis 43 sind jeweils in einem Fahrzeug angeordnet. Sie weisen hierbei Eingabe- und Ausgabemittel sowie einen Mikroprozessor auf, auf dem Steuerprogramme zur Steuerung der im folgenden beschriebenen Funktionen der Navigationseinrichtung 41 bis 43 ablaufen.

Zur Benutzung des Navigationssystems hat sich ein Nutzer zuerst in der Navigationszentrale als Nutzer zu registrieren. Hierbei wird eine Nutzer-Kennung an den Nutzer vergeben und unter Umständen eine Autorisierungskennung zwischen Navigationszentrale und Nutzer vereinbart. Nach der Registrierung ist es dem Nutzer möglich, über die Endgeräte 31 bis 33 auf die Dienste der Navigationszentrale zuzugreifen. Diese Dienste umfassen die Funktionen eines Reise-Planungsassistenten, der eine integrierte Reiseplanung mit Routenplanung, Hotelplanung und Eventsuche bereitstellt. Die Kommunikation zwischen Nutzer und Navigationszentrale wird hierbei über ein WEB-basiertes Benutzer-Interface geführt, so daß auf einfache Weise die Einbindung von Partnersystemen möglich ist.

Zur Durchführung einer Routenplanung für einen registrierten Nutzer werden von diesem Nutzer oder von einem Dritten (beispielsweise dessen Sekretärin) eine Route des Nutzers spezifizierende Daten beispielsweise über das Endgerät 31 an die Navigationszentrale 5 übermittelt. Der Nutzer oder der Dritte gibt so beispielsweise die Adresse eines Standorts und eines oder mehrere Zielorte ein. Die Navigationszentrale 5 führt mit diesen Daten eine Lokalisierung der Start- und Zielorte durch, ermittelt so lokalisierte Start- und Zielpunkte, und führt weiter eine Routenplanung durch. Weiter speichert sie für die Route beispielsweise folgende die Route spezifizierende Detailinformationen ab: Zielpunkt, Startpunkt, berechnete Routenlänge, berechnete benötigte Zeit, geplanter Abfahrtstermin mit Datum und Uhrzeit. Weiter kann der Route von dem Nutzer ein Name zugeordnet werden. Auch eine automatische Namensvergabe durch die Navigationszentrale 5 ist möglich.

Im Weiteren kann der Nutzer oder ein Dritter für den Nutzer weitere Funktionen des integrierten Planungsassistenten, beispielsweise Hotelplanung und Eventsuche durchführen und die daraus gewonnenen Ergebnisse der Route zuordnen. Auch eine interaktive Abänderung der Route im Rahmen dieses Planungsvorgangs ist möglich.

Hierbei ist es auch möglich, daß für einen registrierten Nutzer nicht nur eine Route, sondern zwei oder mehrere Routen, beispielsweise zehn verschiedene Routen geplant und in der Navigationszentrale 5 als für die Navigation vorgemerkte Routen oder Zielpunkte abgespeichert werden. Weiter ist es möglich, daß hierbei beispielsweise Adreßdaten oder Termindaten mittels eines Outlook-Plugins von anderen Applikationen in den von der Navigationszentrale 5 bereitgestellten Reiseplanungsassistenten-Dienst übernommen werden.

Ein Nutzer möchte nun das Navigationssystem in einem Fahrzeug nutzen, in dem beispielsweise die Navigationseinrichtung 41 installiert ist.

Hierzu ist es zuerst notwendig, daß die Navigationseinrichtung 41 in der Navigationszentrale 5 als dem Nutzer zugeordnet registriert wird. Dies kann beispielsweise dadurch erreicht werden, daß der Nutzer seine Nutzerkennung und optional eine Autorisierungskennung über eine Eingabeeinrichtung der Navigationseinrichtung 41 eingibt, diese Daten von der Navigationseinrichtung 41 über das Kommunikationsnetz 2 an die Navigationszentrale 5 übermittelt werden und dort die Zuordnung der Navigationseinrichtung 41 zu dem registrierten Nutzer bewirken. Vorzugsweise übermittelt die Navigationseinrichtung 41 hierbei neben der Nutzerkennung auch eine Kennung der Navigationseinrichtung 41, beispielsweise deren Hardware-ID, an die Navigationszentrale 5.

Diese Zuordnung kann von dem System auch bei Deaktivierung der Navigationseinrichtung 41 beibehalten werden.

Im folgenden wird wiederholt ermittelt, ob für den Nutzer eine neue oder geänderte Route vorliegt, d.h. ob für den Nutzer ein neuer oder gelöschter Zielpunkt vorliegt. Beispielsweise wird eine Route von ein oder mehreren Zielpunkten spezifiziert, die beispielsweise von dem Fahrzeug nacheinander abzufahren sind (z. B. um an jedem Zielpunkt einen Termin wahrzunehmen). Eine neue Route liegt dann vor, wenn eine neue Route, d.h. mindestens ein neuer Zielpunkt spezifiziert wurde. Eine geänderte Route liegt vor, wenn einer Route zugeordnete Zielpunkte gelöscht oder geändert worden sind. Wenn so eine neue oder geänderte Route vorliegt, d.h., wenn ein neuer oder gelöschter Zielpunkt bekannt wird, werden die neue oder geänderte Route spezifizierende Daten, die zumindest einen neuen oder geänderten Zielpunkt beinhalten, an die dem Nutzer nun zugeordnete Navigationseinrichtung 41 übermittelt.

Werden so beispielsweise über das Endgerät 31 neue Zielpunkte für den Nutzer in der Navigationszentrale 5 registriert oder bestehende Zielpunkte gelöscht oder abgeändert (Änderung des Terminplans), so werden durch diese Ermittlung diese Änderungen erkannt und zumindest die neuen gelöschten oder geänderten Zielpunkte der jeweiligen Route von der Navigationszentrale 5 in die nun dem Nutzer zugeordnete Navigationseinrichtung 41 heruntergeladen.

In der Navigationseinrichtung 41 werden die von der Navigationszentrale 5 heruntergeladenen Routen und/oder Zielpunkte gespeichert und auf Anforderung dem Nutzer angezeigt. So wird dem Nutzer auf Anforderung beispielsweise eine Liste von zehn zur Verfügung stehenden Routen angezeigt. Wird nun eine dieser Routen gestartet, so ermittelt die Navigationseinrichtung 41 die aktuelle Position des Fahrzeugs und übermittelt diese Position und mindestens einen von der Navigationszentrale 5 empfangenen Zielpunkt über das Kommunikationsnetz 2 an die Navigationszentrale 5 zur Berechnung einer Route. Die Navigationszentrale 5 berechnet nun mittels dieser Daten unter Zugriff auf Wegenetzdaten Routendaten und übermittelt die berechneten Routendaten an die Navigationseinrichtung 41. Routendaten sind beispielsweise Daten, die einen Ausschnitt des Wegenetzes um die berechnete Route sowie eine Spezifikation der Routenführung innerhalb dieses Wegenetzes beschreiben. Im folgenden vergleicht die Navigationseinrichtung die Position des Fahrzeuges kontinuierlich mit der in den empfangenen Routendaten beschriebenen Route und generiert hieraus Navigationsanweisungen für den Nutzer.

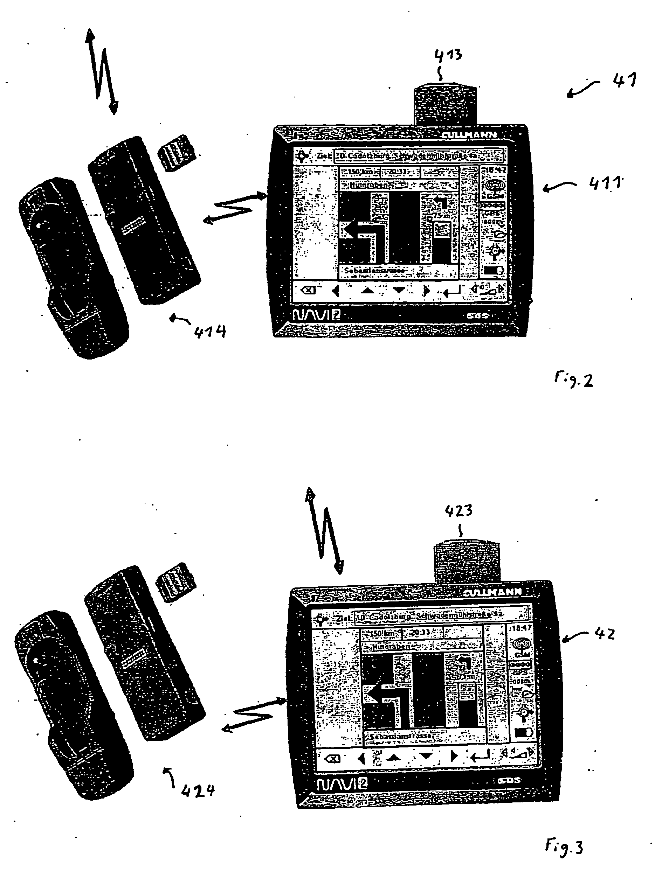

Fig. 2 zeigt nun eine mögliche Ausgestaltung der Navigationseinrichtung 41. Die Navigationseinrichtung besteht aus einer Freisprecheinrichtung 414 für Mobilfunktelefone, die eine Haltevorrichtung für Mobilfunktelefone aufweist, sowie aus einer Erweiterungseinrichtung 411, die über einen GPS-Empfänger 413 und ein graphisches Benutzer-Interface verfügt. Das graphische Benutzer-Interface basiert hierbei beispielsweise auf einem Touch-Screen, der sowohl der Eingabe von Daten als auch der Ausgabe von Daten dient. Die Kommunikation über das Kommunikationsnetz 2 wird hierbei mittels des in die Freisprecheinrichtung 414 einzulegenden Mobilfunkendgerätes realisiert, d.h. die Erweiterungseinrichtung 411 greift über die Freisprecheinrichtung 414 auf die Datenschnittstelle dieses Mobilfunkendgerätes zu.

Weiter ist es auch möglich, daß die Erweiterungseinrichtung 411 auf Funktionen der Freisprecheinrichtung, beispielsweise Sprachansage oder Sprachausgabe, Spracherkennung und Spracheingabe zugreift, so daß diese Funktionen eine Doppelnutzung erfahren.

Fig. 3 zeigt ein weiteres Ausführungsbeispiel einer Navigationseinrichtung, nämlich die Navigationseinrichtung 42. Bei dieser Navigationseinrichtung handelt es sich um eine Stand-Alone-Lösung, die über einen GPS-Empfänger 423 und einen eigenständigen Mobilfunk-Empfänger und -Sender verfügt. Hierbei ist es auch möglich, daß die Navigationseinrichtung 42, wie in Fig. 3 gezeigt, Funktionen einer Freisprecheinrichtung 424 nutzt.

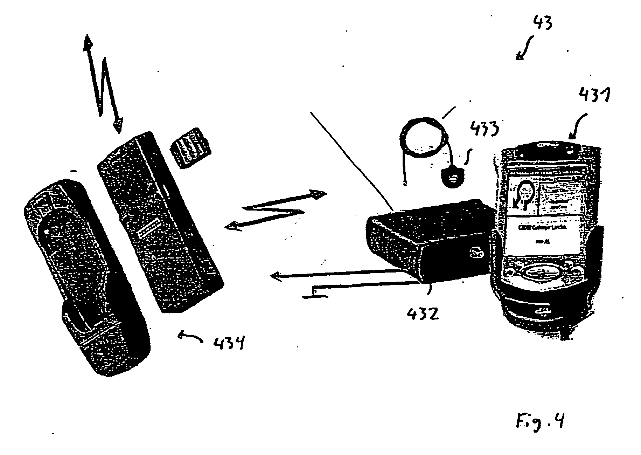

Fig. 4 zeigt eine weitere Möglichkeit der Realisierung einer Navigationseinrichtung, nämlich die Navigationseinrichtung 43. Die Navigationseinrichtung 43 wird von einem PDA 431 (PDA = Personal Digital Assistant) mit zugeordneter Haltevorrichtung, einer Steuereinrichtung 432, einem GPS-Receiver 433 und einer Freisprecheinrichtung 434 gebildet. Die Kommunikation über das Kommunikationsnetz 2 wird hierbei wie bei dem Ausführungsbeispiel nach Fig. 2 mittels des Funkteils des in die Freisprecheinrichtung 434 einzulegenden Mobilfunkendgerätes realisiert.

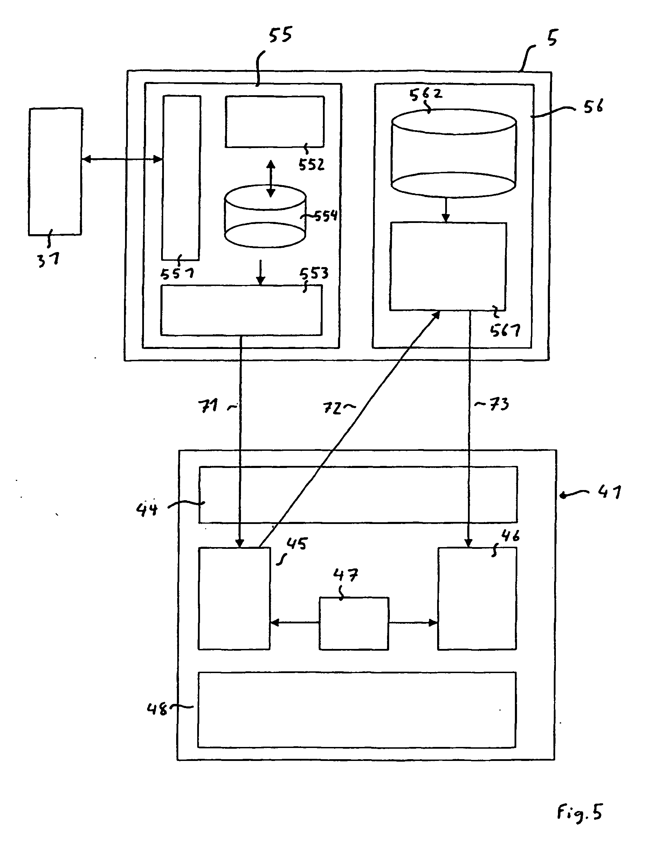

Die detaillierte Funktionsweise einer erfindungsgemäßen Navigationszentrale und einer erfindungsgemäßen Navigationseinrichtung wird im folgenden anhand von Fig. 5 beschrieben.
Fig.5 zeigt die Navigationszentrale 5, das Endgerät 31 und die Navigationseinrichtung 41. Aus funktioneller Sicht weist die Navigationszentrale 5 zwei Steuereinheiten 55 und 56 mit Funktionsgruppen 551, 552, 553 und 561, und Speichereinheiten 554 und 562 auf. Die Navigationseinrichtung 41 weist aus funktioneller Sicht eine Kommunikationseinheit 44, eine Ein- und Ausgabeeinheit 48, eine Lokalisierungseinheit 47 und zwei Steuereinheiten 45 und 46 auf.

Die Kommunikationseinheit 44 ermöglicht die Kommunikation über das Kommunikationsnetz 2 und wird beispielsweise von einem Mobilfunkendgerät oder von einer integrierten Mobilfunk-Empfangs- und Sendeeinrichtung gebildet. Die Ein- und Ausgabeeinheit 48 wird beispielsweise von einem Display, einem Tastenfeld, einem Lautsprecher, einem Mikrofon oder ähnlichen Ein- oder Ausgabemitteln gebildet. Bei der Lokalisierungseinheit 47 handelt es sich beispielsweise um einen GPS-Empfänger.

Die Funktionsgruppe 551 enthält die Funktionen der Steuereinheit 55, die ein WEB-basiertes Benutzer-Interface für die Eingabe von Routen durch die Endgeräte 31 bis 33 bereitstellen. Auf diesem Benutzer-Interface setzen die Funktionen der Funktionsgruppe 552 auf, die die bereits oben beschriebenen Funktionen der Speicherung und Änderung von Routen in der Speichereinheit 554 umfassen.

Bei der Speichereinheit 554 handelt es sich beispielsweise um eine Nutzerdatenbank, in der Datensätze für sämtliche registrierten Nutzer der Navigationszentrale 5 abgelegt sind. Jeder dieser Datensätze umfaßt hierbei beispielsweise ein Nutzerprofil, dem Nutzer zugeordnete Billing-Daten und Nutzer-Präferenzen sowie eine Liste von ein oder mehreren Routen, die jeweils durch Routen spezifizierende Daten detailliert sind. Derartige Daten werden hierbei von ein oder mehreren Ziel- und Endpunkten, Datumsangaben und Zeitangaben, sowie unter Umständen von weiteren Datensätzen gebildet. Die Route kann hierbei durch einen Routennamen spezifiziert werden und auch eine zugeordnete Kennung aufweisen, die andeutet, ob diese Route für die Navigation vorgemerkt ist, nicht vorgemerkt ist oder bereits abgefahren ist.

Die Funktionen der Funktionsgruppe 553 interagieren mit Funktionen der der Navigationszentrale 5 zugeordneten Navigationseinrichtungen, beispielsweise der Navigationseinrichtung 41 bis 43. Mittels dieser Interaktion wird eine Synchronisation der Änderungen der den jeweiligen Nutzern zugeordneten Routen und/oder Zielgruppen in der Navigationszentrale 55 gegenüber den jeweiligen in den Navigationseinrichtungen gespeicherten Routen und/oder Zielgruppen des jeweiligen zugeordneten Nutzers durchgeführt. Die Funktionen der Funktionsgruppe 553 ermitteln so, ob für einen Nutzer eine neue oder geänderte Route vorliegt. Ist dies der Fall, so wird von den Funktionen ermittelt, ob der Nutzer einer Navigationseinrichtung zugeordnet ist und welchem der Navigationseinrichtungen dieser Nutzer augenblicklich zugeordnet ist. Sodann werden die zugehörige neue, gelöschte oder geänderte Route spezifizierenden Daten an diese Navigationseinrichtung über das Kommunikationsnetz 2 übermittelt. Diese Daten können hierbei aus dem gesamten Datensatz der Route bestehen. Es ist jedoch auch möglich, daß sie lediglich einen oder mehrere neue, gelöschte, oder geänderte Zielpunkte beinhalten.

Zur Durchführung dieser Synchronisation ist es beispielsweise möglich, daß die Navigationseinrichtungen, wenn sie sich in einem betriebsbereiten Zustand befinden, in regelmäßigen Abständen über das Kommunikationsnetz 2 eine Anforderungsnachricht an die Navigationszentrale 5 senden, in der angefragt wird, ob für den Nutzer, dem die Navigationseinrichtung augenblicklich zugeordnet ist, neue, gelöschte oder geänderte Zielpunkte vorliegen. Die Funktionen der Funktionsgruppe 553 bearbeiten diese Anfrage und überprüfen, ob eine derartige Änderung seit der letzten Anfrage stattgefunden hat. Hierbei ist es auch möglich, daß derartige Anfragen bei jedem Aufbau einer Verbindung mit der Navigationszentrale an die Navigationszentrale gesendet werden. Dies hat insbesondere dann Vorteile, wenn die Kommunikation zwischen Navigationszentrale und Navigationseinrichtung nicht über einen paketorientierten Dienst, beispielsweise GPRS (GPRS = General Packet Radio Service) geführt wird, sondern wenn hierzu eine Nutzverbindung über das Kommunikationsnetz 2 aufgebaut wird.

Weiter ist es auch möglich, daß die Funktionen der Funktionsgruppe 553 das Durchführen von Änderungen und Ergänzungen durch die Funktionen der Funktionsgruppe 552 erfassen und, sobald sie eine derartige Änderung oder Ergänzung ermitteln, überprüfen, ob für den zugeordneten Nutzer in der Navigationszentrale 5 eine Navigationseinrichtung registriert ist und ob diese Navigationseinrichtung in einem betriebsbereiten Zustand ist. Ist dies der Fall, so werden die die zugehörige neue, gelöschte oder geänderte Route spezifizierenden Daten, wie oben beschrieben, an die zugeordnete Navigationseinrichtung gesendet.

Beim Start der Navigation ermittelt die Steuereinheit 45 die Position des Fahrzeugs mittels Zugriff auf die Lokalisierungseinheit 47, ermittelt die vom Fahrzeugführer gewählte Route und sendet die ermittelte Position sowie mindestens einen von der Navigationszentrale 5 empfangenen Zielpunkt, der die Route spezifiziert, über das Kommunikationsnetz 2 an die Steuereinheit 56 der Navigationszentrale 5. Die Funktionen der Funktionsgruppe 561 berechnen nun mittels Zugriff auf die Speichereinheit 562 die von dem Fahrzeug befahrene Route. Hierzu sind in der Speichereinheit 562 Wegenetzdaten gespeichert. Zusätzlich ist es hier auch möglich, daß die Funktionen der Funktionsgruppe 561 für eine derartige Berechnung zusätzliche Daten, beispielsweise Verkehrsinformationen, Wetterinformationen und Benutzerpräferenzen, beispielsweise schnellste Route, Mautstraße zulassen, Verkehrsinformation berücksichtigen, berücksichtigt.

Vorzugsweise wird die Route hierbei lediglich für ein Korridor-Segment der Route berechnet, und die diesem Korridor-Segment zugeordneten Daten an die Funktionseinheit 46 über das Kommunikationsnetz 2 übermittelt. Die für einen Korridor ermittelten und berechneten Routendaten beinhalten hierbei Wegenetzdaten innerhalb dieses Korridors sowie Wegeleitdaten, die die Routenführung innerhalb des Korridor-Segments beschreiben. Sobald die Steuereinheit 46 ermittelt, daß das Fahrzeug in den Randbereich des aktuellen Korridor-Segments gelangt, sendet sie eine Anforderungsnachricht an die Steuereinheit 56, die die Übermittlung der Routendaten für das nachfolgende Korridor-Segment anfordert.

Weiter vergleicht die Steuereinheit 46 die empfangenen Routendaten mit der Position des Fahrzeugs, die die Steuereinheit 46 mittels der Ortungseinrichtung 47 ermittelt. Mittels dieses Vergleichs generiert sie Navigationsanweisungen für den Fahrzeugführer. Verläßt der Nutzer die vorgeschlagene Route, so führt ihn die Steuereinheit 46 innerhalb des Korridor-Segments immer auf den kürzesten Weg zur Route zurück.

## Patentansprüche

1. Verfahren zur Unterstützung der Navigation eines Fahrzeuges, bei dem eine im Fahrzeug angeordnete Navigationseinrichtung (41, 42, 43) Navigationsanweisungen zur Steuerung des Fahrzeuges ausgibt, die Navigationseinrichtung (41, 42, 43) die aktuelle Position des Fahrzeugs ermittelt und diese Position und mindestens einen Zielpunkt über ein Kommunikationsnetz (2) an eine Navigationszentrale (5) zur Berechnung einer Route übermittelt, die Navigationszentrale (5) mittels der übermittelten Position und dem mindestens einen übermittelten Zielpunkt unter Zugriff auf Wegenetzdaten Routendaten berechnet und die berechneten Routendaten (73) an die Navigationseinrichtung (41, 42, 43) übermitteln, die Navigationseinrichtung (41, 42, 43) die empfangenen Routendaten mit der Position des Fahrzeugs vergleicht und hieraus Navigationsanweisungen für einen Nutzer generiert, die im Fahrzeug angeordnete Navigationseinrichtung (41, 42, 43) einem Nutzer zugeordnet wird, von einem von der Navigationseinrichtung (41, 42, 43) verschiedenen Endgerät (31, 32, 33) von dritten Personen während der Fahrt über ein weiteres Kommunikationsnetz (1) an die Navigationszentrale (5) eine Route des Nutzers spezifizierende Daten, die zumindest einen Zielpunkt beinhalten, übermittelt werden, die die Route spezifizierenden Daten dem Nutzer zugeordnet in der Navigationszentrale (5) gespeichert werden, in der Navigationszentrale (5) ermittelt wird, ob für den Nutzer ein neuer oder gelöschter Zielpunkt vorliegt, und, wenn dies der Fall ist, die die zugehörige neue oder geänderte Route spezifizierenden Daten (71), die zumindest einen neuen oder gelöschten Zielpunkt beinhalten, über das eine Kommunikationsnetz (2) an die dem Nutzer zugeordnete Navigationseinrichtung (41, 42, 43) übermittelt werden, und die Navigationseinrichtung (41, 42, 43) mit der aktuellen Position des Fahrzeugs den zuvor von der Navigationszentrale (5) empfangenen, mindestens einen Zielpunkt an die Navigationszentrale (5) übermittelt.

2. Verfahren nach Anspruch 1,
**dadurch gekennzeichnet,**
**daß** die Navigationseinrichtung (41) in regelmäßigen Abständen über das eine Kommunikationsnetz (2) bei der Navigationszentrale (5) anfragt, ob für den Nutzer, dem die Navigationseinrichtung (41) zugeordnet ist, neue oder gelöschte Zielpunkte vorliegen.

3. Verfahren nach Anspruch 1,
**dadurch gekennzeichnet,**
**daß** die Navigationszentrale (5) überprüft, ob für einen Nutzer in der Navigationszentrale eine aktive Navigationseinrichtung (41, 42, 43) registriert ist, und, falls dies der Fall ist, neue oder gelöschte Zielpunkte übermittelt.

4. Verfahren nach Anspruch 1,
**dadurch gekennzeichnet,**
**daß** von der Navigationseinrichtung (41, 42, 43) bei jedem Aufbau einer Verbindung mit der Navigationszentrale (5) angefragt wird, ob neue oder gelöschte Zielpunkte für den Nutzer vorliegen, dem die Navigationseinrichtung (41, 42, 43) zugeordnet ist.

5. Verfahren nach einem der vorangehenden Ansprüche,
**dadurch gekennzeichnet,**
**daß** die Berechnung der Routendaten für zwei oder mehr aufeinanderfolgende Korridorsegmente der Route erfolgt und daß die Navigationseinrichtung die Übermittlung der Routendaten des nachfolgenden Korridorsegments von der Navigationszentrale anfordert, bevor das Fahrzeug das aktuelle Korridorsegment verläßt.

6. Verfahren nach Anspruch 5,
**dadurch gekennzeichnet,**
**daß** die Navigationseinrichtung vor Anforderung der Routendaten des nächsten Korridorsegments bei der Navigationszentrale anfragt, ob für die Route neue oder gelöschte Zielpunkte vorliegen und, wenn dies der Fall ist, eine neue Routenberechnung durch die Navigationszentrale mit dem neuen oder geänderten Zielpunkt veranlaßt.

7. Verfahren nach einem der vorangehenden Ansprüche,
**dadurch gekennzeichnet,**
**daß** die Navigationszentrale (5) eine WEB-basierte Benutzerschnittstelle bereitstellt und von dem Endgerät (31, 32, 33) die eine Route des Nutzers spezifizierenden Daten über diese Schnittstelle übermittelt werden.

8. Verfahren nach Anspruch 7,
**dadurch gekennzeichnet,**
**daß** die Navigationszentrale (5) über die WEB-basierte Benutzerschnittstelle einen Reise-Planungsassistenten, insbesondere mit Routenplanung, Hotelplanung oder Eventsuche, bereitstellt und daß Zielpunkte aus dem Reise-Planungsassistenten automatisch an die Navigationseinrichtung (41, 42, 43) des zugeordneten Nutzers übermittelt werden.

9. Verfahren nach einem der vorangehenden Ansprüche,
**dadurch gekennzeichnet,**
**daß** die Navigationseinrichtung (41, 42, 43) durch Eingabe einer Nutzerkennung in die Navigationseinrichtung (41, 42, 43) und Übermittlung der Nutzerkennung an die Navigationszentrale (5) in der Navigationszentrale (5) als dem Nutzer zugeordnet registriert wird.

10. Verfahren nach einem der vorangehenden Ansprüche,
**dadurch gekennzeichnet,**
**daß** auf eine Anforderung von der Navigationseinrichtung (41, 42, 43) eine Liste aller vorgemerkten und noch nicht für die Navigation verwendeten Zielpunkte des der Navigationseinrichtung (41, 42, 43) zugeordneten Nutzers übermittelt werden.

11. Verfahren nach einem der vorangehenden Ansprüche,
**dadurch gekennzeichnet,**
**daß** von einem Terminplanungs-Werkzeug eines Endgeräts (31, 32, 33) über das weitere Kommunikationsnetz (1) an die Navigationszentrale (5) eine Route des Nutzers spezifizierende Daten, die zumindest einen Zielpunkt beinhalten, übermittelt werden.

12. Verfahren nach einem der vorangehenden Ansprüche,
**dadurch gekennzeichnet,**
**daß** eine in zeitlicher Reihenfolge sortierte Liste, die Termindaten und zugeordnete Zielpunkte enthält, von der Navigationszentrale an die Navigationseinrichtung (41, 42, 43) des zugeordneten Nutzers übermittelt wird.

13. Verfahren nach einem der vorangehenden Ansprüche,
**dadurch gekennzeichnet,**
**daß** an die Navigationszentrale zur Berechnung der Route in einem Nutzerprofil gespeicherte Benutzerpräferenzen übermittelt werden.

14. Verfahren nach einem der vorangehenden Ansprüche,
**dadurch gekennzeichnet,**
**daß** die Navigationszentrale (5) entlang der zu berechnenden Route mittels einer Korridorsuche POls ermittelt und an die Navigationseinrichtung (41, 42, 43) übermittelt.

15. Verfahren nach einem der vorangehenden Ansprüche,
**dadurch gekennzeichnet,**
**daß** die Navigationszentrale (5) die zu berechnende Route betreffende Verkehrsinformation ermittelt und an die Navigationseinrichtung (41, 42, 43) übermittelt.

16. Navigationszentrale (5) zur Durchführung des Verfahrens nach Patentanspruch 1 zur Unterstützung der Navigation von zwei oder mehr Fahrzeugen, wobei die Navigationszentrale (5) eine erste Steuereinheit (55) aufweist, die so ausgestaltet ist, dass sie von einem Endgerät (31, 32, 33) über ein erstes Kommunikationsnetz (1) eine Route eines Nutzers spezifizierende Daten, die zumindest einen Zielpunkt beinhalten, empfängt und die die Route spezifizierenden Daten dem Nutzer zugeordnet in einer Speichereinrichtung (554) abspeichert, die erste Steuereinheit (55) so ausgestaltet ist, dass sie ermittelt, ob für einen Nutzer ein neuer oder gelöschter Zielpunkt vorliegt und, wenn dies der Fall ist, die zugehörige neue oder geänderte Route spezifizierenden Daten, die zumindest einen neuen oder gelöschten Zielpunkt beinhalten, über ein zweites Kommunikationsnetz (2) an eine dem Nutzer zugeordnete und von dem Endgerät (31, 32, 33) verschiedene Navigationseinrichtung (41, 42, 43) übermittelt, und die Navigationszentrale (5) eine zweite Steuereinheit (56) aufweist, die so ausgestaltet ist, dass sie von der Navigationseinrichtung (41, 42, 43) die aktuelle Position des Fahrzeuges und mindestens einen von der Navigationszentrale empfangenen Zielpunkt über das zweite Kommunikationsnetz (2) zur Berechnung einer Route empfängt, sie mittels der übermittelten Position und dem mindestens einen übermittelten Zielpunkt unter Zugriff auf Wegenetzdaten Routendaten berechnet und die berechneten Routendaten über das zweite Kommunikationsnetz (2) an die zugeordnete Navigationseinrichtung (41, 42, 43) zur Generierung von Navigationsanweisungen für den Nutzer übermittelt.

## Claims

1. A method for supporting the navigation of a vehicle in which a navigation device (41, 42, 43) arranged in the vehicle issues navigation instructions for controlling the vehicle, the navigation device (41, 42, 43) determines the current position of the vehicle and transmits this position and at least one destination point via a communication network (2) to a navigation central control unit (5) to calculate a route, the navigation central control unit (5) calculates route data by means of the transmitted position and the at least one transmitted destination point with access to road network data and transmits the calculated route data (73) to the navigation device (41, 42, 43), the navigation device (41, 42, 43) compares the received route data with the position of the vehicle and from this generates navigation instructions for a user, the navigation device (41, 42, 43) located in the vehicle is allocated to a user, data specifying a user's route which contains at least one destination point are transmitted to the navigation central control unit (5) by third persons during the trip by an end device (31, 32, 33) different from the navigation device (41, 42, 43) via a further communication network (1), the data specifying the user's route are stored in the navigation central control unit (5) allocated to the user, it is determined in the navigation central control unit (5) whether a new or deleted destination point is present for the user and if this is the case, data (71) specifying the relevant new or amended route containing at least one new or deleted destination point, are transmitted to the navigation device (41, 42, 43) assigned to the user via the communication network (2) and the navigation device (41, 42, 43) transmits the at least one destination point received previously by the navigation central control unit (5) with the current position of the vehicle to the navigation central control unit (5).

2. The method according to claim 1, **characterised in that** the navigation device (41) enquires at regular intervals at the navigation central control unit (5) via the communication network (2) whether new or deleted destination points are present for the user to whom the navigation device (41) is allocated.

3. The method according to claim 1, **characterised in that** the navigation central control unit (5) checks whether an active navigation device (41, 42, 43) is registered for a user in the navigation central control unit and if this is the case, transmits new or deleted destination points.

4. The method according to claim 1, **characterised in that** whenever a connection is set up with the navigation central control unit (5), the navigation device (41, 42, 43) enquires whether new or deleted destination points are present for the user to whom the navigation device (41, 42, 43) is allocated.

5. The method according to any one of the preceding claims, **characterised in that** the route data are calculated for two or more successive corridor segments of the route and that the navigation device requests that that navigation central control unit transmits the route data of the successive corridor segment before the vehicle leaves the current corridor segment.

6. The method according to claim 5, **characterised in that** before requesting the route data of the next corridor segment, the navigation device enquires at the navigation central control unit whether new or deleted destination points are present for the route and if this is the case, instigates a new route calculation by the navigation central control unit using the new or amended destination point.

7. The method according to any one of the preceding claims, **characterised in that** the navigation central control unit (5) provides a web-based user interface and the data specifying a user's route are transmitted by the end device (31, 32, 33) via this interface.

8. The method according to claim 7, **characterised in that** the navigation central control unit (5) provides a journey planning assistant via the web-based user interface, in particular with route planning, hotel planning or event search and that destination points are automatically transmitted from the journey planning assistant to the navigation device (41, 42, 43) of the allocated user.

9. The method according to any one of the preceding claims, **characterised in that** the navigation device (41, 42, 43) is registered by entering a user identification into the navigation device (41, 42, 43) and transmitting the user identification to the navigation central control unit (5) as allocated to the user in the navigation central control unit (5).

10. The method according to any one of the preceding claims, **characterised in that** when requested by the navigation device (41, 42, 43), a list of all previously noted destination points of the user allocated to the navigation device (41, 42, 43), which have not yet been used for navigation, are transmitted.

11. The method according to any one of the preceding claims, **characterised in that** data specifying a user's route, containing at least one destination point, are transmitted to the navigation central control unit (5) by a time scheduling tool of an end device (31, 32, 33) via the further communication network (1).

12. The method according to any one of the preceding claims, **characterised in that** a list sorted in time sequence, containing schedule data and allocated destination points, is transmitted from the navigation central control unit to the navigation device (41, 42, 43) of the allocated user.

13. The method according to any one of the preceding claims, **characterised in that** user preferences stored in a user profile are transmitted to the navigation central control unit to calculate the route.

14. The method according to any one of the preceding claims, **characterised in that** the navigation central control unit (5) determines points of interest along a route to be calculated by means of a corridor search and transmits this to the navigation device (41, 42, 43).

15. The method according to any one of the preceding claims, **characterised in that** the navigation central control unit (5) determines the traffic information relevant to the route to be calculated and transmits this to the navigation device (41, 42, 43).

16. A navigation central control unit (5) to carry out the method according to claim 1 for supporting the navigation of two or more vehicles, wherein the navigation central control unit (5) comprises a first control unit (55) which is configured in such a manner that it receives data specifying a user's route, which contains at least one destination point, from an end device (31, 32, 33) via a first communication network (1), and stores the data specifying the route allocated to the user in a storage device (554), the first control unit (55) is configured in such a manner that it determines whether a new or deleted destination point is present for a user and if this is the case, transmits the data specifying the relevant new or amended route, containing at least one new or deleted destination point, via a second communication network (2) to a navigation device (41, 42, 43) allocated to the user and different from the end device (31, 32, 33) via a second communication network (2) and the navigation central control unit (5) has a second control unit (56) which is configured in such a manner that it receives from the navigation device (41, 42, 43) the current position of the vehicle and at least one destination point received from the navigation central control unit via the second communication network (2) to calculate the route, said second control unit calculates route data by means of the transmitted position and the at least one transmitted destination point with access to road network data and transmits the calculated route data to the allocated navigation device (41, 42, 43) via the second communication network (2) to generate navigation instructions for the user.

## Revendications

1. Procédé destiné à assister la navigation d'un véhicule,
dans lequel un système de navigation (41, 42, 43) placé dans un véhicule délivre des instructions de navigation pour piloter le véhicule,
le système de navigation (41, 42, 43) détermine la position actuelle du véhicule et transmet cette position et au moins un point de destination, via un réseau de communication (2) à une centrale de navigation (5) pour le calcul d'un trajet,
au moyen de la position transmise et du au moins un point de destination transmis, la centrale de navigation (5) calcule des données concernant le trajet, en accédant à des données de réseau routier et transmet les données calculées concernant le trajet (73) au système de navigation (41, 42, 43),
le système de navigation (41, 42, 43) compare les données concernant le trajet qui ont été réceptionnées avec la position du véhicule et génère à partir de ces dernières des instructions de navigation pour un utilisateur,
le système de navigation (41, 42, 43) placé dans le véhicule est associé à un utilisateur,
des données spécifiant un trajet de l'utilisateur, qui contiennent au moins un point de destination sont transmises de troisièmes personnes pendant le voyage par un terminal (31, 32, 33) qui est différent du système de navigation (41, 42, 43) via un autre réseau de communication (1) supplémentaire à la centrale de navigation (5),
les données spécifiant le trajet sont mémorisées dans la centrale de navigation (5), en étant associées à l'utilisateur,
dans la centrale de navigation (5), il est déterminé si un point de destination nouveau ou effacé est présent pour l'utilisateur, et si le cas se présente, les données (71) correspondantes spécifiant le nouveau trajet ou trajet modifié, qui contiennent au moins un point de destination nouveau ou effacé sont transmises via l'un des réseaux de communication (2) au système de navigation (41, 42, 43) associé à l'utilisateur,
et avec la position actuelle du véhicule, le système de navigation (41, 42, 43) transmet le au moins un point de destination précédemment déterminé par la centrale de navigation (5) à la centrale de navigation (5).

2. Procédé selon la revendication 1, **caractérisé en ce que**,
à intervalles réguliers, le système de navigation (41) interroge la centrale de navigation (5) via le réseau de communication (2), pour savoir si des points de destination nouveaux ou effacés sont présents pour l'utilisateur auquel est associé le système de navigation (41).

3. Procédé selon la revendication 1, **caractérisé en ce que**,
la centrale de navigation (5) vérifie si pour un utilisateur, un système de navigation (41, 42, 43) actif est enregistré dans la centrale de navigation, et si ce n'est pas le cas, elle transmet des points de destination nouveaux ou effacés.

4. Procédé selon la revendication 1, **caractérisé en ce que**,
à chaque établissement d'une communication avec la centrale de navigation (5), le système de navigation (41, 42, 43) interroge pour savoir si des points de destination nouveaux ou effacés sont présents pour l'utilisateur auquel est associé le système de navigation (41, 42, 43).

5. Procédé selon l'une quelconque des revendications précédentes, **caractérisé en ce que**,
le calcul des données concernant le trajet est effectué pour deux ou pour plusieurs segments de couloir du trajet et **en ce que** le système de navigation demande à la centrale de navigation la transmission des données concernant le trajet pour le prochain segment de couloir, avant que le véhicule ne quitte le segment de couloir actuel.

6. Procédé selon la revendication 5, **caractérisé en ce que**,
avant la demande des données de route du prochain segment de couloir auprès de la centrale de navigation, le système de navigation interroge, pour savoir si des points de destination nouveaux ou effacés sont présents pour le trajet, et si le cas se présente, il déclenche un nouveau calcul de route par la centrale de navigation, avec le point de destination nouveau ou modifié.

7. Procédé selon l'une quelconque des revendications précédentes, **caractérisé en ce que**,
la centrale de navigation (5) met à disposition une interface basée WEB et **en ce que** le terminal (31, 32, 33) transmet via cette interface les données spécifiant l'un des trajets de l'utilisateur.

8. Procédé selon la revendication 7, **caractérisé en ce que**,
via l'interface basée WEB, la centrale de navigation (5) met à disposition un assistant de programmation du voyage, notamment avec une programmation du trajet, une programmation de l'hôtel ou une recherche d'événements et **en ce que** des points de destination issus de l'assistant de programmation du trajet sont transmis automatiquement au système de navigation (41, 42, 43) de l'utilisateur associé.

9. Procédé selon l'une quelconque des revendications précédentes, **caractérisé en ce que**,
par saisie d'une identification d'utilisateur dans le système de navigation (41, 42, 43) et par transmission de l'identification de l'utilisateur à la centrale de navigation (5), le système de navigation (41, 42, 43) est enregistré dans la centrale de navigation (5) comme étant associé à l'utilisateur.

10. Procédé selon l'une quelconque des revendications précédentes, **caractérisé en ce que**,
sur une demande du système de navigation (41, 42, 43), une liste de tous les points de destination prénotés de l'utilisateur associé au système de navigation (41, 42, 43) et qui ne sont pas encore utilisés pour la navigation est transmise.

11. Procédé selon l'une quelconque des revendications précédentes, **caractérisé en ce que**,
un outil de programmation de rendez-vous d'un terminal (31, 32, 33) transmet via l'autre réseau de communication (1) à la centrale de navigation (5) des données spécifiant un trajet de l'utilisateur, lesquelles contiennent au moins un point de destination.

12. Procédé selon l'une quelconque des revendications précédentes, **caractérisé en ce que**,
une liste triée en séquence temporelle qui contient les données concernant les rendez-vous et des points de destination associés est transmise par la centrale de navigation au système de navigation (41, 42, 43) de l'utilisateur associé.

13. Procédé selon l'une quelconque des revendications précédentes, **caractérisé en ce que**,
des préférences de l'utilisateur mémorisées dans un profil utilisateur sont transmises à la centrale de navigation, pour le calcul du trajet.

14. Procédé selon l'une quelconque des revendications précédentes, **caractérisé en ce que**,
tout au long du trajet à calculer, la centrale de navigation (5) détermine des POI au moyen d'une recherche de couloirs et les transmet au système de navigation (41, 42, 43).

15. Procédé selon l'une quelconque des revendications précédentes, **caractérisé en ce que**,
la centrale de navigation (5) détermine les informations de trafic concernant le trajet à calculer et les transmet au système de navigation (41, 42, 43).

16. Centrale de navigation (5) pour exécuter le procédé selon la revendication 1 destinée à assister la navigation de deux ou de plusieurs véhicules,
la centrale de navigation (5) comportant une première unité de commande (55) qui est conçue de sorte à réceptionner à partir d'un terminal (31, 32, 33), via un premier réseau de communication (1) des données spécifiant le trajet d'un utilisateur, qui contiennent au moins un point de destination, et mémorise les données spécifiant le trajet dans un dispositif de mémoire (554), tout en les associant à un utilisateur, la première unité de commande (55) étant conçue de sorte à déterminer si un point de destination nouveau ou effacé est présent pour un utilisateur et si ce cas se présente, transmet les données nouvelles ou effacées correspondantes spécifiant le trajet, qui contiennent au moins un point de destination nouveau ou effacé, via un deuxième réseau de communication (2) à un système de navigation (41, 42, 43) associé à l'utilisateur et différent du terminal (31, 32, 33), la centrale de navigation (5) comportant une deuxième unité de commande (56), qui est conçue de sorte à réceptionner à partir du système de navigation (41, 42, 43), via le deuxième réseau de communication (2) la position du véhicule et au moins un point de destination réceptionné par la centrale de navigation, via le deuxième réseau de communication (2) pour le calcul d'un trajet, et au moyen de la position transmise et du au moins un point de destination transmis, elle calcule des données concernant le trajet en accédant aux données du réseau routier et elle transmet les données concernant le trajet calculées via le deuxième réseau de communication (2) au système de navigation (41, 42, 43) associé, pour la génération d'instructions de navigation pour l'utilisateur.
